# EUROPÄISCHE PATENTANMELDUNG

(11) **EP 2 604 618 A1**
(43) Veröffentlichungstag der Anmeldung: **19.06.2013**
(21) Anmeldenummer: 11193041.8
(22) Anmeldetag: 12.12.2011
(51) Int. Cl.: C07F 19/00

(54) **Metall-Komplexverbindungen als Katalysatoren für Polyurethan-Zusammensetzungen**

(71) Anmelder: Sika Technology AG, 6340 Baar (CH)
(72) Erfinder: Cannas, Rita, 8600 Dübendorf (CH); Burckhardt, Urs, 8049 Zürich (CH)
(74) Vertreter: Sika Patent Attorneys

(57) **Zusammenfassung**

Die vorliegende Erfindung betrifft Metall-Komplexverbindungen der Formel Mₖ(L)ₓ(Y)_{kz-nx}, wobei der Ligand L die Formel (I) aufweist, und Metall-Komplexverbindungen, die das Reaktionsprodukt aus mindestens einem Salz oder einem Komplex eines Übergangsmetalls oder eines metallischen Hauptgruppenelements der Gruppen 13 bis 15 und mindestens einem 1,3 Ketoamid umfassen. Derartige Komplexverbindungen sind insbesondere als Katalysator für Polyurethan-Zusammensetzungen geeignet. Die Erfindung betrifft auch zweikomponentige Polyurethan-Zusammensetzungen, umfassend mindestens ein Polyisocyanat als erste Komponente, mindestens ein Polyol als zweite Komponente und mindestens eine derartige Metall-Komplexverbindung als Katalysator. Zusätzlich betrifft die Erfindung verschiedene Verwendungen dieser zweikomponentigen Polyurethan-Zusammensetzungen.

## Beschreibung

### Technisches Gebiet

Die vorliegende Erfindung betrifft das Gebiet der Polyurethan-Zusammensetzungen sowie Katalysatoren für Polyurethan-Zusammensetzungen.

### Stand der Technik

Polyurethan-Zusammensetzungen sind seit langem bekannt und werden in vielen Bereichen eingesetzt. Klassisch wird in der Fachwelt zwischen einkomponentigen und zweikomponentigen Polyurethan-Zusammensetzungen unterschieden. Einkomponentige Polyurethan-Zusammensetzungen härten unter dem Einfluss von Luftfeuchtigkeit aus. Zweikomponentige Polyurethan-Zusammensetzungen enthalten als zweite Komponente eine Härterkomponente, welche im Wesentlichen Polyamine und/oder Polyole enthält. In beiden Fällen werden Isocyanatgruppen-haltige Verbindungen oder Prepolymere eingesetzt.

Um die Aushärtung zu beschleunigen, werden Katalysatoren beigefügt. Zwar ist eine Vielzahl von Polyurethan-Katalysatoren bekannt, allerdings ist eine Großzahl hinsichtlich der Urethanisierungsreaktion, d.h. der Reaktion von alkoholischen OH-Gruppen mit Isocyanatgruppen, nicht sonderlich selektiv, sondern katalysiert mehr oder weniger auch andere Reaktionen der Isocyanatgruppe, wie Allophanat- und Biuret-Bildung oder Cyclotrimerisierung. Insbesondere steht die Urethanisierungsreaktion meist in Konkurrenz zur Reaktion der Isocyanatgruppen mit Wasser, welche unter Freisetzung von gasförmigem Kohlendioxid zu Harnstoffgruppen führt. Diese Nebenreaktion ist bei vielen Polyurethan-Zusammensetzungen, insbesondere bei deren Anwendung als Kleb- und Dichtstoff, als Beschichtung oder Gießharz, störend, da sie bei der Aushärtung zu Blasenbildung und damit schlechter Formstabilität, geringerer Haftung, tieferer mechanischer Festigkeit, unbefriedigender Ästhetik sowie zu wenig reproduzierbaren Ergebnissen führt. Das für die Blasenbildung verantwortliche Wasser stammt entweder aus dem Restwasser-Gehalt der Bestandteile der Zusammensetzung, insbesondere der Polyole und der Füllstoffe, welche auch nach Trocknungsprozessen mehr oder weniger feucht sind und einen typischen Restwasser-Gehalt von 0,01 bis 0,5 Gew.-% aufweisen, oder aus der Umgebungsfeuchtigkeit, welche durch Diffusion aus der Luft oder aus den Substraten in die Zusammensetzung eindringt, was besonders bei hoher Luftfeuchtigkeit, porösen Substraten und/oder hydrophilen Polyolen, wie den in der Praxis oft eingesetzten Polyetherpolyolen, auftritt. Gerade die in der Praxis vielfach verwendeten Aminkatalysatoren, beispielsweise tertiäre Amine, und Zinnkatalysatoren, beispielsweise Dialkylzinncarboxylate, führen oft zu ausgeprägter Blasenbildung. Der Restwasser-Gehalt in der Polyurethan-Zusammensetzung bewirkt außerdem, dass hydrolyseempfindliche Katalysatoren, wie beispielsweise Bismutcarboxylate, bei längerem Aufbewahren der Zusammensetzung vor dem Gebrauch (Lagerung) deaktiviert werden, was sich negativ auf die Aushärtungsgeschwindigkeit und die mechanischen Eigenschaften auswirkt. Bei einigen bekannten Katalysatoren, beispielsweise den Dialkylzinncarboxylaten, ist darüber hinaus die Beständigkeit der ausgehärteten Zusammensetzung unter thermischer Belastung ungenügend, wobei der Katalysator einen Molekulargewichts-Abbau, d.h. eine Depolymerisation, unter Verlust an mechanischer Festigkeit verursacht. Weiterhin sind viele der bekannten Katalysatoren bei Raumtemperatur fest und in den Polyurethan-Ausgangsmaterialien oder den Weichmachern wenig löslich, so dass für ihren Einsatz in Zusammensetzungen, die bei Raumtemperatur härten, organische Lösungsmittel eingesetzt werden müssen. Schließlich sind manche der bekannten Katalysatoren, insbesondere solche auf Basis von Schwermetallverbindungen, toxikologisch bedenklich.

Die Verwendung von monofunktionellen 1,3-Ketoamiden ohne Polyether-Struktureinheiten als Inhibitoren für Kupfer(II)-katalysierte ungesättigte Polyesterharze ist aus der US 2010/0069575 bekannt. Die US 6,734,268 beschreibt unter anderem die Verwendung von 1,3-Ketoamiden, darunter generisch auch Polyether-Typen, als "Dekomplexierer" für Metallsalz-katalysierte radikalisch aushärtende Klebstoffe, insbesondere auf (Meth)acrylatbasis. Als geeignete Metallsalze werden Metallsalze genannt, die sich von Kupfer, Vanadium, Chrom, Ruthenium, Eisen, Mangan, Nickel, Antimon und Palladium ableiten. Diese sind mit Liganden, wie Aminen, Alkoxiden etc., komplexiert und zur Härtungsbeschleunigung mit dem Dekomplexierer aktiviert. Als Beispiel ist 1-Acetoacetanilin als Dekomplexierer für den Komplex aus Cu(II)-bromid und N,N-Dimethylacrylamid aufgeführt.

### Darstellung der Erfindung

Aufgabe der vorliegenden Erfindung ist es, die vorstehend beschriebenen Nachteile des Standes der Technik zu beseitigen. Insbesondere besteht die Aufgabe der vorliegenden Erfindung darin, einen Katalysator bereitzustellen, der zu einer Verbesserung nachfolgender Eigenschaften bzw. zu einem ausgewogenen Verhältnis dieser führt.

Der Katalysator soll sich durch eine hohe katalytische Aktivität und Selektivität hinsichtlich der Urethanisierungsreaktion, d.h. der Reaktion von alkoholischen OH-Gruppen mit Isocyanatgruppen, auszeichnen und so einen raschen und durch Feuchtigkeit möglichst wenig gestörten Aufbau eines mechanisch hochwertigen Polyurethan-Polymers aus polyfunktionellen Alkoholen (Polyolen) und Polyisocyanaten ermöglichen. Zum anderen soll der Katalysator eine ausreichende Hydrolyseresistenz besitzen, um unter üblichen Lagerbedingungen, d.h. bei Raumtemperatur oder bei leicht erhöhten Temperaturen, über mehrere Monate in einer restwasserhaltigen Polyol-Zusammensetzung ohne starken Aktivitätsverlust erhalten zu bleiben. Weiterhin soll der Katalysator die thermische Beständigkeit des ausgehärteten Polyurethan-Polymers möglichst wenig herabsetzen. Überdies soll der Katalysator bei Raumtemperatur oder bei leicht erhöhten Temperaturen flüssig sein bzw. in den Polyurethan-Ausgangsmaterialien oder in Weichmachern gut löslich sein, damit er in bei Raumtemperatur härtenden, lösungsmittelfreien Systemen auf einfache Weise eingesetzt werden kann. Letztendlich soll der Katalysator eine möglichst geringe Giftigkeit aufweisen.

Überraschenderweise wurde nun eine neue Metall-Komplexverbindung gemäß Anspruch 1 mit den gewünschten Eigenschaften gefunden. Die neue Metall-Komplexverbindung besitzt die Formel Mₖ(L)ₓ(Y)_{kz-nx}, wobei M für ein z-wertiges Metallkation, ausgewählt aus Metallkationen und Oxometallkationen der Übergangsmetalle oder der metallischen Hauptgruppenelemente der Gruppen 13 bis 15 steht, k für eine ganze Zahl von 1 bis 20 steht, x für 1, 2, 3 oder 4 steht, z für 2, 3 oder 4 steht, n für 1, 2 oder 3 steht, Y für einen einfach negativ geladenen Liganden steht und L für einen Liganden der Formel (I) steht, 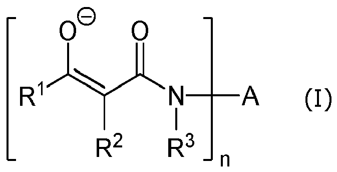 wobei R¹ und R² unabhängig voneinander für einen Wasserstoff-Rest, für einen einwertigen gesättigten oder ungesättigten Kohlenwasserstoff-Rest mit 1 bis 10 Kohlenstoff-Atomen, oder zusammen für einen zweiwertigen Alkylen-Rest mit 3 bis 6 Kohlenstoffatomen stehen,
R³ für einen Wasserstoff-Rest, einen einwertigen gesättigten Kohlenwasserstoff-Rest, der gegebenenfalls Heteroatome enthält, mit 1 bis 12 Kohlenstoffatomen, oder zusammen für einen zweiwertigen Alkylen-Rest, der gegebenenfalls Heteroatome enthält, mit 3 bis 6 Kohlenstoffatomen steht, und A für einen Polyoxyalkylen-Rest oder einen Rest einer polyoxyalkylierten Verbindung gegebenenfalls mit einer oder zwei endständigen 1,3-Ketoamid-Gruppen der Formel 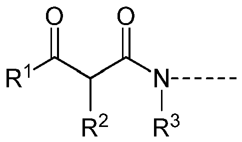 steht.

Bei dem Metallkation handelt es sich vorzugsweise um ein Metallkation oder Oxometallkation von Scandium, Yttrium, Lanthan, Titan, Zirkonium, Hafnium, Vanadium, Niob, Tantal, Chrom, Molybdän, Wolfram, Mangan, Eisen, Cobalt, Nickel, Kupfer, Zink, Aluminium, Gallium, Indium, Germanium, Zinn, Blei, Antimon und Bismut, besonders bevorzugt um ein Metallkation oder Oxometallkation von Lanthan, Titan, Zirkonium, Molybdän, Eisen, Zink, Zinn und Bismut. Ganz besonders bevorzugt sind das Dioxomolybdän(VI)-, das Eisen(III)-, das Zink(II)-, das Bismut(III)- und das Zirkonium(IV)-Kation, da diese eine besonders hohe katalytische Aktivität und Selektivität hinsichtlich der Urethanisierungsreaktion aufweisen.

In der erfindungsgemäßen Metall-Komplexverbindung der Formel Mₖ(L)ₓ(Y)_{kz-nx} steht A für einen Polyoxyalkylen-Rest oder einen Rest einer polyoxyalkylierten Verbindung, welche(r) bevorzugt ein mittleres Molekulargewicht Mₙ von etwa 200 bis 5000 g/mol, und besonders bevorzugt von etwa 200 bis 2000 g/mol, aufweist. Ein zu niedriges Molekulargewicht hat den Nachteil, dass die Löslichkeit der erfindungsgemäßen Metall-Komplexverbindung tendenziell niedrig ist, während ein zu hohes Molekulargewicht dazu führt, dass der Metallgehalt der erfindungsgemäßen Metall-Komplexverbindung tief ist und ihre katalytische Aktivität pro Gewichtseinheit damit tendenziell gering ist.

Die erfindungsgemäße Metall-Komplexverbindung der Formel Mₖ(L)ₓ(Y)_{kz-nx} stellt eine ein- oder mehrkernige Komplexverbindung mit einem oder mehreren Metallkationen als Zentralatom und einem oder mehreren 1,3-Ketoamid-Anionen der Formel (I) als Liganden dar, die über 1,3-Ketoamid-Gruppen koordinativ an das Zentralatom gebunden sind und zwei oder drei Zentralatome überbrücken können, wenn n für 2 oder 3 steht. In diesem Fall kann die erfindungsgemäße Metall-Komplexverbindung eine mehrkernige Komplexverbindung mit k = 2 bis 20 darstellen.

Vorzugsweise steht k für eine ganze Zahl von 1 bis 10, besonders bevorzugt für eine ganze Zahl von 1 bis 5 und ganz besonders bevorzugt für 1. Im letzteren Fall ist die erfindungsgemäße Metall-Komplexverbindung damit einkernig. Sie weißt tendenziell eine niedrige Viskosität und eine gute Löslichkeit auf.

Vorzugsweise steht n für 1 oder 2, da derartige Metall-Komplexverbindungen tendenziell eine niedrige Viskosität und eine gute Löslichkeit aufweisen.

Besonders bevorzugt sind erfindungsgemäße Metall-Komplexverbindungen, bei denen k für 1 und n für 1 bzw. k für 1 und n für 2 steht.

Ebenfalls bevorzugt sind erfindungsgemäße Metall-Komplexverbindungen der Formel Mₖ(L)ₓ(Y)_{kz-nx}, in denen k für 1 steht, n für 1 oder 2 steht und M ein Dioxomolybdän(VI)-, ein Eisen(III)-, ein Zink(II)-, ein Bismut(III)- oder ein Zirkonium(IV)-Kation ist.

Ganz besonders bevorzugt sind Metall-Komplexverbindungen der Formel Mₖ(L)ₓ(Y)_{kz-nx}, in denen M ein Eisen(III)-Kation ist, k 1 ist, x 3 ist und kz-nx 0 ist, oder M ein Dioxomolybdän(VI)-Kation ist, k 1 ist, x 2 ist und kz-nx 0 ist, oder M ein Zink(II)-Kation ist, k 1 ist, x 2 ist und kz-nx 0 ist, oder M ein Bismut(III)-Kation ist, k 1 ist, x 3 ist und kz-nx 0 ist, oder M ein Zirkonium(IV)-Kation ist, k 1 ist, x 4 ist und kz-nx 0 ist.

Der Ligand L der Formel (I) weist formal eine über die 1,3-Ketoamid-Struktur delokalisierte einfach negative Ladung auf. Er kann daher in verschiedenen Grenzstrukturen, beispielsweise in den nachfolgend dargestellten Grenzstrukturen, gezeichnet werden. Alle möglichen Grenzstrukturen des Liganden L der Formel (I) werden im Rahmen der vorliegenden Erfindung als gleichwertig angesehen.

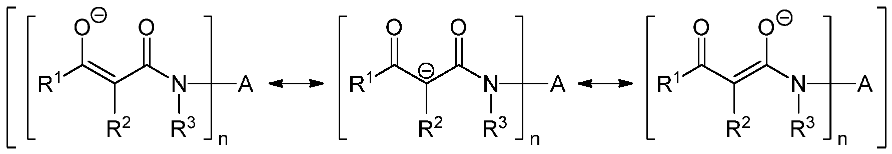

Der Ligand Y stellt einen beliebigen einfach negativ geladenen Liganden dar, insbesondere ein geeignetes organisches Anion, bevorzugt ein Carbonylat, besonders bevorzugt ein 1,3-Dicarbonylat, beispielsweise Acetylacetonat oder 2,2,6,6-Tetramethylheptan-3,5-dionat.

Die erfindungsgemäße Metall-Komplexverbindung der Formel Mₖ(L)ₓ(Y)_{kz-nx} mit M als Zentralatom und koordinativ gebundenen Liganden L der Formel (I) und gegebenenfalls Y ist neutral.

Die Liganden L der Formel (I) können gleich oder verschieden sein. Besonders bevorzugt liegen gleiche Liganden L der Formel (I) vor.

In der Formel (I) stehen R¹ und R² unabhängig voneinander für einen Wasserstoff-Rest, für einen einwertigen gesättigten oder ungesättigten Kohlenwasserstoff-Rest mit 1 bis 10 Kohlenstoff-Atomen, oder zusammen für einen zweiwertigen Alkylen-Rest mit 3 bis 6 Kohlenstoffatomen.

Bei dem einwertigen gesättigten Kohlenwasserstoff-Rest mit 1 bis 10 Kohlenstoff-Atomen handelt es sich bevorzugt um einen Alkyl-Rest mit 1 bis 4 Kohlenstoffatomen, insbesondere einen Methyl-, Propyl-, Isopropyl- oder einen Butyl-Rest. Diese haben den Vorteil, dass die Metall-Komplexverbindung damit tendenziell flüssig oder gut löslich ist. Ganz besonders bevorzugt handelt es sich bei dem Alkyl-Rest mit 1 bis 4 Kohlenstoffatomen um einen Methyl-Rest. Bei dem einwertigen ungesättigten Kohlenwasserstoff-Rest handelt es sich bevorzugt auch um einen Arylrest, insbesondere um einen Phenyl-Rest.

Bevorzugt bilden R¹ und R² zusammen einen zweiwertigen Methyl-Rest mit 3 bis 4 Kohlenstoffatomen, insbesondere mit 3 Kohlenstoffatomen.

Besonders bevorzugt ist R² ein Wasserstoff-Rest, da die Metall-Komplexverbindung damit tendenziell besonders stabil ist.

Unter einem zweiwertigen Alkylen-Rest mit 3 bis 6 Kohlenstoffatomen wird ein Rest der Formel -(CH₂)ₙ- verstanden, wobei n 3 bis 6 bedeutet.

R³ steht für einen Wasserstoff-, einen einwertigen gesättigten Kohlenwasserstoff-Rest, der gegebenenfalls Heteroatome enthält, mit 1 bis 12 Kohlenstoffatomen, einen Benzyl-Rest oder zusammen für einen zweiwertigen Alkylen-Rest, der gegebenenfalls Heteroatome enthält, mit 3 bis 6 Kohlenstoffatomen.

Bei dem einwertigen gesättigten Kohlenwasserstoff-Rest mit 1 bis 12 Kohlenstoffatomen handelt es sich bevorzugt um einen Alkylrest mit 1 bis 8 Kohlenstoffatomen, besonders bevorzugt um einen Methyl-, einen Ethyl-, einen Propyl-, einen Isopropyl-, einen Butyl-, einen Isobutyl-, einen 2-Butyl- oder einen 2-Ethyl-hexyl-Rest. Dies hat den Vorteil, dass die Metall-Komplexverbindung damit tendenziell flüssig oder gut löslich ist.

Besonders bevorzugt steht R³ für einen Wasserstoff-, Methyl- oder IsopropylRest.

Die Auswahl der bevorzugten Reste in dem Liganden L der Formel (I) beruht vorzugsweise darauf, dass die entsprechenden 1,3-Ketoamide, welche als Ausgangsstoffe zur Herstellung der erfindungsgemäßen Metall-Komplexverbindung der Formel Mₖ(L)ₓ(Y)_{kz-nx} eingesetzt werden, einfach herstellbar und/oder kommerziell erhältlich und damit preisgünstig sind.

Die Erfindung betrifft auch ein Verfahren zur Herstellung von Metall-Komplexverbindungen, wobei ein 1,3-Ketoamid der Formel 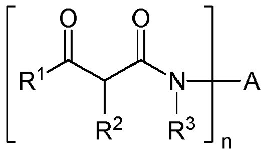 mit R¹, R², R³, A und n, wie vorstehend definiert, mit einem Metall-Salz oder Metall-Komplex, ausgewählt aus einem Salz oder einem Komplex eines Übergangsmetalls oder eines metallischen Hauptgruppenelements der Gruppen 13 bis 15, umgesetzt wird.

Bevorzugt sind Salze oder Komplexe von Scandium, Yttrium, Lanthan, Titan, Zirkonium, Hafnium, Vanadium, Niob, Tantal, Chrom, Molybdän, Wolfram, Mangan, Eisen, Cobalt, Nickel, Kupfer, Zink, Aluminium, Gallium, Indium, Germanium, Zinn, Blei, Antimon und Bismut. Besonders bevorzugt sind Salze oder Komplexe von Lanthan, Titan, Zirkonium, Molybdän, Eisen, Zink, Zinn und Bismut. Ganz besonders bevorzugt sind Dioxomolybdän(VI)-, Eisen(III)-, Zink(II)-, Bismut(III)- und Zirkonium(IV)-Salze oder -Komplexe.

Bevorzugte Salze dieser Metalle sind Dichloride und Carbonate. Bevorzugte Komplexe dieser Metalle sind Dicarboxylate und die 1,3-Diketonate. Letztere Komplexe sind ganz besonders bevorzugt.

Die Stöchiometrie zwischen dem Salz bzw. dem Komplex des Übergangsmetalls bzw. des metallischen Hauptgruppenelements der Gruppen 13 bis 15 und dem 1,3-Ketoamid wird vorzugsweise so eingestellt, dass die Anzahl der 1,3-Ketoamid-Gruppen mindestens der Wertigkeit z des Metallatoms entspricht. Beispielsweise werden auf 1 mol Bismut(III)-carboxylat vorzugsweise mindestens 3 mol 1,3-Ketoamid mit n=1 oder 1,5 mol 1,3-Ketoamid mit n=2 eingesetzt.

Das eingesetzte 1,3-Ketoamid wird vorzugsweise durch Umsetzung eines Polyetheramins mit Diketen oder einem 1,3-Ketoester erhalten.

Bevorzugte Polyetheramine sind Polyoxyalkylenamine, vorzugsweise mit einem mittleren Molekulargewicht Mₙ von etwa 200 bis 5000 g/mol, wie sie kommerziell unter den Handelsnamen Jeffamine^{®} (von Huntsman), Polyetheramine (von BASF) oder PC Amine^{®} (von Nitroil) erhältlich sind. Besonders bevorzugte Typen sind Jeffamine^{®} M-600, Jeffamine^{®} M-1000, Jeffamine^{®} M-2000, Jeffamine^{®} M-2070, Jeffamine^{®} XTJ-249, Jeffamine^{®} XTJ-435, Jeffamine^{®} XTJ-436, Jeffamine^{®} XTJ-581, Jeffamine^{®} D-230, Jeffamine^{®} D-400, Jeffamine^{®} D-2000, Jeffamine^{®} D-4000, Jeffamine^{®} XTJ-582, Jeffamine^{®} XTJ-578, Jeffamine^{®} HK-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-533, Jeffamine^{®} XTJ-536, Jeffamine^{®} XTJ-542, Jeffamine^{®} XTJ-548, Jeffamine^{®} XTJ-559, Jeffamine^{®} SD-231, Jeffamine^{®} SD-401, Jeffamine^{®} SD-2001, Jeffamine^{®} T-403, Jeffamine^{®} T-3000, Jeffamine^{®} T-5000, Jeffamine^{®} XTJ-566 und Jeffamine^{®} ST-404 (alle von Huntsman), sowie dazu analoge Typen von BASF und Nitroil. Besonders bevorzugt sind Polyoxyalkylenamine mit einem mittleren Molekulargewicht Mₙ von etwa 200 bis 2000 g/mol. Ganz besonders bevorzugt sind Polyoxypropylenamine, insbesondere Polyoxypropylenmonoamine und Polyoxypropylendiamine, welche gegebenenfalls Anteile anderer Oxyalkyleneinheiten wie Oxybutylen- und insbesondere Oxyethyleneinheiten enthalten. Als Polyoxypropylenmonoamine eignen sich insbesondere die Typen Jeffamine^{®} M-600, Jeffamine^{®} M-1000 und Jeffamine^{®} XTJ-581. Als Polyoxypropylendiamine eignen sich insbesondere die Typen Jeffamine^{®} D-230, Jeffamine^{®} D-400, Jeffamine^{®} D-2000, Jeffamine^{®} XTJ-582, Jeffamine^{®} XTJ-578, Jeffamine^{®} SD-231, Jeffamine^{®} SD-401 und Jeffamine^{®} SD-2001.

Bevorzugte 1,3-Ketoester sind Alkylacetoacetate, besonders bevorzugt Methylacetoacetat, Ethylacetoacetat und tert. Butylacetoacetat.

Vorzugsweise erfolgt die Herstellung des 1,3-Ketoamids dadurch, dass eine Mischung des Polyetheramins und des Diketens oder des 1,3-Ketoesters vorzugsweise unter Rühren bei 100 bis 500 mbar, besonders bevorzugt etwa 300 mbar, vorzugsweise während 1 bis 20 Stunden, besonders bevorzugt etwa 4 Stunden, auf eine Temperatur von vorzugsweise 50 bis 150°C, besonders bevorzugt etwa 110°C, erwärmt wird. Anschließend wird das Reaktionsgemisch vorzugsweise im Vakuum von flüchtigen Bestandteilen befreit.

Das 1,3-Ketoamid kann vorzugsweise auch dadurch gewonnen werden, dass man das Diketen oder den 1,3-Ketoester vorzugsweise langsam zu einem auf vorzugsweise 80 bis 160°C, besonders bevorzugt etwa 130°C, erwärmten Polyetheramin gibt und das Reaktionsgemisch vorzugsweise weitere 10 bis 30 Stunden, besonders bevorzugt etwa 18 Stunden, bei 80 bis 160°C, vorzugsweise etwa 130°C, hält. Anschließend wird vorzugsweise auf Raumtemperatur gekühlt und das Gemisch vorzugsweise im Vakuum von flüchtigen Bestandteilen befreit. Der erhaltene Rückstand wird vorzugsweise in Ethylacetat gelöst, die Lösung mit Salzsäure gewaschen, mit Magnesiumsulfat getrocknet und vollständig eingeengt.

Wie vorstehend erwähnt, ist unter anderem der Einsatz von Dioxomolybdän(VI)-, Eisen(III)-, Zink(II)- und Bismut(III)-Salzen oder -Komplexen bevorzugt.

Die Herstellung der bevorzugten Dioxomolybdän(VI)-Komplexverbindung erfolgt vorzugsweise dadurch, dass das/der Dioxomolybdän(VI)-Salz oder -Komplex mit dem 1,3-Ketoamid vermischt und die Mischung vorzugsweise unter Rühren während 1 bis 24 Stunden, bevorzugt etwa 2 Stunden, auf eine Temperatur von 50 bis 130°C, bevorzugt etwa 80°C, erwärmt wird. Anschließend wird das Reaktionsgemisch vorzugsweise im Vakuum von flüchtigen Bestandteilen befreit.

Die Herstellung der ebenfalls bevorzugten Eisen(III)-Komplexverbindung erfolgt vorzugsweise dadurch, dass das/der Eisen(III)-Salz oder -Komplex mit dem 1,3-Ketoamid vermischt und die Mischung vorzugsweise unter Rühren während 1 bis 24 Stunden, bevorzugt etwa 5 Stunden, auf eine Temperatur von 50 bis 130°C, bevorzugt etwa 90°C, erwärmt wird. Anschließend wird das Reaktionsgemisch vorzugsweise im Vakuum von flüchtigen Bestandteilen befreit.

Die Herstellung der ebenfalls bevorzugten Zink(II)-Komplexverbindung erfolgt vorzugsweise dadurch, dass das/der Zink(II)-Salz oder der -Komplex mit dem 1,3-Ketoamid vermischt und die Mischung vorzugsweise unter Rühren während 1 bis 24 Stunden, bevorzugt etwa 3 Stunden, auf eine Temperatur von 50 bis 130°C, bevorzugt etwa 90°C, erwärmt wird. Anschließend wird das Reaktionsgemisch vorzugsweise im Vakuum von flüchtigen Bestandteilen befreit.

Die ebenfalls bevorzugten Bismut(III)-Komplexverbindungen können vorzugsweise gewonnen werden, indem das/der Bismut(III)-Salz oder -Komplex mit dem 1,3-Ketoamid vermischt und die Mischung vorzugsweise unter Rühren während 1 bis 24 Stunden, bevorzugt etwa 2 Stunden, auf eine Temperatur von 50 bis 130°C, bevorzugt etwa 80°C, erwärmt wird. Bevorzugt wird das Reaktionsgemisch anschließend auf vorzugsweise Raumtemperatur abgekühlt.

Die Erfindung betrifft auch die mit den vorstehend geschilderten Verfahren erhältlichen Metall-Komplexverbindung, d.h. Metall-Komplexverbindungen, die die Reaktionsprodukte aus mindestens einem Salz oder einem Komplex eines Übergangsmetalls oder eines metallischen Hauptgruppenelements der Gruppen 13 bis 15 und mindestens einem 1,3-Ketoamid der Formel 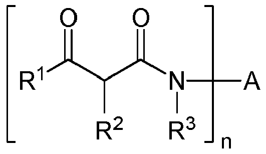 umfassen, wobei R¹, R², R³, A und n die vorstehend beschriebenen Definitionen besitzen.

Die erfindungsgemäßen Metall-Komplexverbindungen können als Katalysator für härtbare Massen, bevorzugt für Polyurethan-Zusammensetzungen, verwendet werden. Die erfindungsgemäße Metall-Komplexverbindung beschleunigt die Aushärtung von härtbaren Massen, welche zu Vernetzungsreaktionen fähige Reaktivgruppen aufweisen. Insbesondere beschleunigt die erfindungsgemäße Metall-Komplexverbindung die Aushärtung von zweikomponentigen Polyurethan-Zusammensetzungen, welche mit sich selbst und gegebenenfalls unter dem Einfluss von Feuchtigkeit über blockierte oder insbesondere freie Isocyanatgruppen vernetzen. Dabei wird vor allem die Urethanisierungsreaktion, d.h. die Reaktion von Isocyanatgruppen mit alkoholischen OH-Gruppen, beschleunigt. Die zu vernetzenden Zusammensetzungen können auch weitere zu Vernetzungsreaktionen fähige Reaktivgruppen, wie insbesondere Alkoxysilangruppen, enthalten. Vorzugsweise handelt es sich dabei um Trialkoxysilan-Gruppen, wie sie beispielsweise in Silan-Haftmitteln enthalten sind.

Die erfindungsgemäßen Metall-Komplexverbindungen können vorteilhafterweise als Katalysator in einer zweikomponentigen Polyurethan-Zusammensetzung eingesetzt werden. Diese umfasst neben der erfindungsgemäßen Metall-Komplexverbindung ein Polyol als erste Komponente sowie ein Polyisocyanat als zweite Komponente.

Als "zweikomponentig" wird eine Zusammensetzung bezeichnet, bei welcher die Bestandteile derselben in zwei verschiedenen Komponenten vorliegen, welche in voneinander getrennten Gebinden gelagert werden, und welche jeweils für sich lagerstabil sind. Erst kurz vor oder während der Applikation der Zusammensetzung werden die beiden Komponenten miteinander vermischt, worauf die vermischte Zusammensetzung aushärtet, wobei die Aushärtung unter Umständen erst durch die Einwirkung von Feuchtigkeit und/oder erhöhter Temperatur abläuft oder vervollständigt wird.

Mit "Poly" beginnende Substanznamen, wie Polyol oder Polyisocyanat, bezeichnen Substanzen, die formal zwei oder mehr der in ihrem Namen vorkommenden funktionellen Gruppen pro Molekül enthalten.

Der Begriff "Polyisocyanat" umfasst Verbindungen mit zwei oder mehr Isocyanatgruppen, unabhängig davon, ob es sich dabei um monomere Diisocyanate, oligomere Polyisocyanate oder Isocyanatgruppen aufweisende Polymere handelt.

Als Polyisocyanat geeignet ist beispielsweise ein Polyisocyanat in Form eines monomeren Di- oder Triisocyanates oder eines Oligomeren eines monomeren Diisocyanates oder eines Derivates eines monomeren Diisocyanates. Als monomere Di- oder Triisocyanate geeignet sind beispielsweise 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3-und -1,4-diisocyanat, 1-Methyl-2,4- und -2,6-diisocyanatocyclohexan und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate, wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan und Tris-(4-isocyanatophenyl)-thiophosphat.

Bevorzugte Polyisocyanate sind handelsübliche Diisocyanate. Besonders bevorzugt sind HDI, IPDI, TDI und MDI sowie Oligomere von Diisocyanaten und Isocyanatgruppen aufweisende Polyurethanpolymere (NCO-Prepolymere).

Als Polyole können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0,02 mEq/g und mit einem Molekulargewicht im Bereich von 1.000 - 30.000 g/mol, sowie Polyoxypropylendiole und -triole mit einem Molekulargewicht von 400 - 8.000 g/mol.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Capro-lacton und Startern wie den vorgenannten zwei- oder dreiwertigen Alkoholen.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, insbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschließender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschließender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren hergestellt werden können; sowie hydrierte polyhydroxyfunktionelle Polymere oder Copolymere von Dienen.

Die genannten Polyole weisen bevorzugt ein mittleres Molekulargewicht von 250 - 30.000 g/mol, insbesondere von 400 - 20.000 g/mol, auf und weisen ferner bevorzugt eine mittlere OH-Funktionalität im Bereich von 1,6 bis 3 auf.

Unter "Molekulargewicht" versteht man bei Oligomeren oder Polymeren stets das Molekulargewichtsmittel Mₙ.

Besonders bevorzugt ist der Einsatz von Polyetherpolyolen, vorzugsweise Polypropylenpolyolen und Polyethylen-polypropylen-Mischpolyolen, sowie Polyesterpolyolen und Polycarbonatpolyolen.

Die erfindungsgemäße Metall-Komplexverbindung liegt vorzugsweise in der ersten Komponente vor, was den Vorteil hat, dass das auf katalytisch wirkende Verbindungen empfindliche Polyisocyanat in der zweiten Komponente in seiner Lagerstabilität (Haltbarkeit) nicht beeinträchtigt wird.

Die erfindungsgemäße Metall-Komplexverbindung kann als alleiniger Katalysator oder auch zusammen mit anderen Katalysatoren, wie beispielsweise Bismut-, Zinn- oder Zirkoniumverbindungen oder tertiären Aminen, eingesetzt werden.

Die erfindungsgemäße zweikomponentige Polyurethan-Zusammensetzung kann gegebenenfalls weitere üblicherweise eingesetzte Hilfs- und Zusatzstoffe, beispielsweise Pigmente, Weichmacher bzw. Verdünner, Härter, Vernetzer, Kettenverlängerer, weitere Katalysatoren, Haftmittel, Stabilisatoren, Rheologiehilfsmittel und Trocknungsmittel, etc. enthalten.

Die erfindungsgemäße Metall-Komplexverbindung, betrachtet als Menge elementares Metall, liegt in der erfindungsgemäßen zweikomponentigen Polyurethan-Zusammensetzung bevorzugt in einer Menge von 0,0002 bis 1 Gew.-%, besonders bevorzugt in einer Menge von 0,001 bis 0,5 Gew.-%, und ganz besonders bevorzugt in einer Menge von 0,002 bis 0,3 Gew.-%, bezogen auf das Gewicht der Zusammensetzung, vor. Zu hohe Mengen führen dazu, dass die Offenzeit bzw. Verarbeitungszeit der Zusammensetzung zu kurz ist, während der Einsatz zu geringer Mengen den Nachteil hat, dass die Zusammensetzung zu schwach katalysiert ist und damit zu langsam, unvollständig und/oder fehlerhaft aushärtet. In der erfindungsgemäßen zweikomponentigen Polyurethan-Zusammensetzung macht die erfindungsgemäße Metall-Komplexverbindung 0,001 bis 10, bevorzugt 0,005 bis 5, und besonders bevorzugt 0,01 bis 3 mmol-Equivalente Metallatome auf 100 g der Zusammensetzung aus.

Handelt es sich bei der erfindungsgemäßen Metall-Komplexverbindung um eine Dioxomolybdän(VI)-Komplexverbindung, dann liegt diese, betrachtet als Menge elementares Molybdän, in der erfindungsgemäßen zweikomponentigen Polyurethan-Zusammensetzung bevorzugt in einer Menge von 0,01 bis 0,5 Gew.-%, besonders bevorzugt in einer Menge von 0,02 bis 0,3 Gew.-%, vor. In der erfindungsgemäßen zweikomponentigen Polyurethan-Zusammensetzung macht die Dioxomolybdän(VI)-Komplexverbindung vorzugsweise 0,1 bis 5, besonders bevorzugt 0,2 bis 3 mmol-Equivalente Molybdän-Atome auf 100 g der Zusammensetzung aus.

Handelt es sich bei der erfindungsgemäßen Metall-Komplexverbindung um eine Eisen(III)- oder Zink(II)-Komplexverbindung, dann liegt diese, betrachtet als Menge elementares Eisen bzw. Zink, in der erfindungsgemäßen zweikomponentigen Polyurethan-Zusammensetzung bevorzugt in einer Menge von 0,005 bis 0,5 Gew.-%, besonders bevorzugt in einer Menge von 0,01 bis 0,2 Gew.-%, vor. In der erfindungsgemäßen zweikomponentigen Polyurethan-Zusammensetzung macht die erfindungsgemäße Eisen(III)- bzw. Zink(II)-Komplexverbindung vorzugsweise 0,05 bis 5, besonders bevorzugt 0,1 bis 2 mmol-Equivalente Eisen-bzw. Zinkatome auf 100 g der Zusammensetzung aus.

Handelt es sich bei der erfindungsgemäßen Metall-Komplexverbindung um eine Bismut(III)-Komplexverbindung, dann liegt diese, betrachtet als Menge elementares Bismut, in der erfindungsgemäßen zweikomponentigen Polyurethan-Zusammensetzung, bevorzugt in einer Menge von 0,001 bis 0,2 Gew.-%, besonders bevorzugt in einer Menge von 0,002 bis 0,1 Gew.-%, vor. In der erfindungsgemäßen zweikomponentigen Polyurethan-Zusammensetzung macht die erfindungsgemäße Bismut(III)-Komplexverbindung vorzugsweise 0,005 bis 1, besonders bevorzugt 0,01 bis 0,5 mmol-Equivalente Bismutatome auf 100 g der Zusammensetzung aus.

Wie bereits vorstehend erwähnt, ist die erfindungsgemäße Metall-Komplexverbindung, trotz seiner Größe und mehrkernigen Struktur, hinsichtlich der Urethanisierungsreaktion vergleichsweise aktiv sowie auch vergleichsweise selektiv. So zeichnet sich die erfindungsgemäße Metall-Komplexverbindung gegenüber Metallverbindungen ohne das 1,3-Ketoamid durch eine deutlich höhere katalytische Aktivität aus. Die Aushärtung der erfindungsgemäßen zweikomponentigen Polyurethan-Zusammensetzung erfolgt im Allgemeinen rasch. Die Selektivität der erfindungsgemäßen Metall-Komplexverbindung leidet jedoch nicht unter der erhöhten Aktivität; die Aushärtung erfolgt ohne Bildung von Blasen, selbst bei ungünstigen Bedingungen, wie hoher Temperatur, hoher Umgebungsfeuchte bzw. hohem Restwassergehalt der Zusammensetzung sowie bei Einsatz von Polyolen mit sekundären OH-Gruppen oder hydrophilen Polyolen. Die erfindungsgemäße Metall-Komplexverbindung ist thermisch und hydrolytisch vergleichsweise stabil, zersetzt sich selbst in einem restwasserhaltigen Polyol nur langsam und behält somit ihre katalytische Aktivität auch bei längerer Lagerdauer. Dennoch führt der Einsatz der erfindungsgemäßen Metall-Komplexverbindung zu guter Stabilität der ausgehärteten Polyurethan-Zusammensetzung unter thermischer Belastung. Die erfindungsgemäße Metall-Komplexverbindung ist ferner bei Raumtemperatur flüssig und/oder in Weichmachern oder Polyolen gut löslich und lässt sich somit in bei Raumtemperatur härtenden Systemen auf einfache Weise und insbesondere ohne Verwendung von flüchtigen organischen Lösungsmitteln (VOC) einsetzen. Schließlich sind einige unter die erfindungsgemäße Metall-Komplexverbindung der Formel Mₖ(L)ₓ(Y)_{kz- nx} fallende Verbindungen nur schwach farbig und führen kaum zu Verfärbungen der ausgehärteten Polyurethan-Zusammensetzung, insbesondere diejenigen, in denen das Metallkation oder Oxometallkation ein Zink(II)-, ein Bismut(III)- oder ein Zirkonium(IV)-Kation ist. Einige Verbindungen besitzen auch eine relativ geringe Toxizität, insbesondere diejenigen, in denen das Metallkation oder Oxometallkation ein Dioxomolybdän(VI)-, ein Eisen(III)-, ein Zink(II)-, ein Bismut(III)- oder ein Zirkonium(IV)-Kation ist."

Die erfindungsgemäße zweikomponentige Polyurethan-Zusammensetzung kann in vielen Bereichen eingesetzt werden, beispielsweise als Vergussmasse, Dichtstoff, Klebstoff, Belag, Beschichtung, Lack, Voranstrich, Hartschaum, Weichschaum, Formteil, Elastomer, Faser, Folie oder Membran für Bau- und Industrieanwendungen, beispielsweise als Elektrovergussmasse, Spachtelmasse, Nahtabdichtung, Hohlraumversiegelung, Fugendichtstoff, Montageklebstoff, Karosserieklebstoff, Scheibenklebstoff, Sandwichelementklebstoff, Kaschierklebstoff, Laminatklebstoff, Verpackungsklebstoff, Holzklebstoff, Parkettklebstoff, Verankerungsklebstoff, Bodenbelag und -beschichtung, Balkon-und Dachbeschichtung, Betonschutzbeschichtung, Parkhausbeschichtung, Rohrbeschichtung, Korrosionsschutzbeschichtung, Textilbeschichtung, Holzlack, Dekorationslack, Primer, Möbelschaum, Polsterschaum, Filterschaum, Isolationsschaum, Schalldämmschaum, Abdichtungsschaum, Verpackungsschaum, Karosserieschaum, Modellbauplatte, Dämpfungselement, Dichtungselement, Reifen, Rollen, Lager, Walze, Förderband, Gummifaden, Schuhsohle, Gehäuse, Fensterprofil, Implantat, Schaumgummi, etc.

Bevorzugte Anwendungsgebiete sind Vergussmassen, Dichtstoffe, Klebstoffe, Beläge, Beschichtungen, Lacke, Voranstriche, Formteile und Elastomere für Bau- und Industrieanwendungen.

Außer in zweikomponentigen Polyurethan-Zusammensetzungen kann die erfindungsgemäße Metall-Komplexverbindung als Katalysator oder Co-Katalysator auch in anderen härtbaren Massen eingesetzt werden, beispielsweise in einkomponentigen Polyurethan-Zusammensetzungen, in Epoxidharzen, Acrylaten und Silikonen.

### Beispiele

### Beschreibung der Messmethoden

Infrarotspektren wurden auf einem FT-IR Gerät 1600 von Perkin-Elmer gemessen (horizontale ATR-Messeinheit mit ZnSe-Kristall; Messfenster 4000-650 cm⁻¹). Flüssige Proben wurden unverdünnt als Filme aufgetragen, feste Proben wurden in CH₂Cl₂ gelöst. Die Absorptionsbanden sind in Wellenzahlen (cm⁻¹) angegeben.

¹H-NMR-Spektren wurden auf einem Spektrometer des Typs Bruker DPX-300 bei 300,13 MHz gemessen; die chemischen Verschiebungen δ sind angegeben in ppm relativ zu Tetramethylsilan (TMS). Echte und Pseudo-Kopplungsmuster wurden nicht unterschieden.

Die Viskosität wurde auf einem thermostatisierten Kegel-Platten-Viskosimeter Physica MCR 300 (Kegeldurchmesser 20 mm, Kegelwinkel 1°, Kegelspitze-Platten-Abstand 0,05 mm, Schergeschwindigkeit 0,1 bis 100 s⁻¹) gemessen.

Massenspektren (FIMS) wurden auf einem hochauflösenden Massenspektrometer des Typs Thermo Scientific LTQ Orbitrap XL gemessen, indem 500 µl der in Methanol gelösten Probe (100 µg/ml) bei einer Injektionsrate von 10 µl/min. und einer Flussrate des Trägers (1 mM Ammoniumformiat in Methanol) von 500 µl/min direkt in den Massenspektrometer eingespritzt wurden; die Detektion erfolgte mittels Elektrospray-Ionisation (ESI⁺).

### Herstellung von 1,3-Ketoamiden

### Allgemeine Herstellvorschrift A

In einem Rundkolben wurde eine Mischung von einem Polyetheramin und tert.-Butylacetoacetat unter Rühren bei 300 mbar während etwa 4 Stunden auf 110 °C erwärmt. Darauf wurde das Reaktionsgemisch im Vakuum von den flüchtigen Bestandteilen befreit.

### Allgemeine Herstellvorschrift B

In einem Rundkolben wurde tert.-Butyl-acetoacetat langsam zu einem auf 130 °C erwärmten Polyetheramin gegeben und das Reaktionsgemisch weitere 18 Stunden bei 130 °C gehalten. Darauf wurde es auf Raumtemperatur gekühlt und im Vakuum von den flüchtigen Bestandteilen befreit. Der erhaltene Rückstand wurde in Ethylacetat gelöst, die Lösung mit Salzsäure-Lösung (0.1 M) gewaschen, mit MgSO₄ getrocknet und vollständig eingeengt.

### 1,3-Ketoamid 1

Gemäß der allgemeinen Herstellvorschrift A wurden 12,00 g Jeffamine^{®} ST-404 und 12,27 g tert.-Butyl-acetoacetat umgesetzt. Man erhielt 17,39 g eines rötlichen Öls.

FT-IR: 2968, 2931, 2871, 1719, 1362, 1584, 1443, 1371, 1324, 1229, 1216, 1102, 929, 850, 775.

### 1,3-Ketoamid 2

Gemäß der allgemeinen Herstellvorschrift A wurden 41,92 g Jeffamine^{®} SD-2001 und 7,80 g tert.-Butyl-acetoacetat umgesetzt. Man erhielt 45,37 g eines hellgelben Öls.

FT-IR: 2939, 2868, 1737, 1589, 1202, 1449, 1371, 1269, 1217, 1092, 934, 906, 868, 800, 772.

FIMS: m/2149.52 (15), 2148.51733 (10, [MNa⁺] für das Oligomer mit x=31), 2144.56 (100), 2143.56.055 (80, [MH⁺] für das Oligomer mit x=31).

### 1,3-Ketoamid 3

Gemäß der allgemeinen Herstellvorschrift A wurden 103,10 g Jeffamine^{®} SD-401 und 65,13 g tert.-Butyl-acetoacetat umgesetzt. Man erhielt 133,90 g eines hellgelben Öls. FT-IR: 2969, 2929, 2870, 1718, 1633, 1584, 1444, 1372, 1341, 1208, 1099, 1018, 928, 862, 773.

### 1,3-Ketoamid 4

Gemäß der allgemeinen Herstellvorschrift B wurden 76,50 g Jeffamine^{®} D-230 und 130,02 g tert.-Butyl-acetoacetat umgesetzt. Man erhielt 51,93 g eines hellgelben Öls.

FT-IR: 3305, 2973, 2875, 1714, 1645, 1542, 1452, 1410, 1358, 1323, 1254, 1147, 1103, 1024, 922, 847, 668.

FIMS: m/z 497.28 (90), 475.30 (54), 439.24 (43), 417.26047 (100, [MH⁺] für das Oligomer mit x=3), 359.22 (41).

### 1,3-Ketoamid 5

Gemäß der allgemeinen Herstellvorschrift B wurden 15,76 g Jeffamine^{®} D-400 und 14,99 g tert.-Butyl-acetoacetat umgesetzt. Man erhielt 13,21 g eines hellgelben Öls.

FT-IR: 3306, 2971, 2929, 2869, 1715, 1646, 1540, 1453, 1409, 1369, 1252, 1143, 1098, 1015, 924, 848, 775, 750.

FIMS: m/z 649.42 (30), 623.45 (63), 607.41339 (100, [MNH₄⁺] für das Oligomer mit x=6), 591.38 (36).

### 1,3-Ketoamid 6

Gemäß der allgemeinen Herstellvorschrift B wurden 82,10 g Jeffamine^{®} D-2000 und 17,14 g tert.-Butyl-acetoacetat umgesetzt. Man erhielt 87,77 g eines hellgelben Öls.

FT-IR: 3322, 2969, 2867, 1715, 1649, 1535, 1451, 1371, 1343, 1296, 1253, 1095, 1013, 921, 866.

### 1,3-Ketoamid 7

Gemäß der allgemeinen Herstellvorschrift B wurden 62,33 g Jeffamine^{®} M-600 und 22,39 g tert.-Butyl-acetoacetat umgesetzt. Man erhielt 58,14 g eines hellgelben Öls.

FT-IR: 3323, 2969, 2867, 1720, 1649, 1547, 1452, 1371, 1342, 1297, 1095, 1013, 924, 817.

FIMS: m/z 655.47 (95), 641.46 (65), 597.43359 (100, [MNH₄⁺] für das Oligomer mit x=8), 583.42 (54), 539.39 (100).

### 1,3-Ketoamid 8

Gemäß der allgemeinen Herstellvorschrift B wurden 56,15 g Jeffamine^{®} XTJ-581 und 15,82 g tert.-Butyl-acetoacetat umgesetzt. Man erhielt 32,14 g eines bräunlichen Öls.

FT-IR: 3324, 2978, 2864, 1715, 1668, 1540, 1456, 1348, 1275, 1256, 1094, 946, 849, 760.

### Herstellung von Polyurethan-Katalysatoren

### Allgemeine Herstellvorschrift C

In einem Rundkolben wurden Dioxomolybdän(VI)-bis(acetylacetonat) und eines der wie beschrieben hergestellten 1,3-Ketoamide vermischt und die Mischung unter Rühren während 2 Stunden auf 80 °C erwärmt. Darauf wurde das Reaktionsgemisch im Vakuum von den flüchtigen Bestandteilen befreit.

### Beispiel 1: Katalysator Mo1

Gemäss der allgemeinen Herstellvorschrift C wurden 3,24 g Dioxomolybdän(VI)-bis(acetylacetonat) und 5,67 g 1,3-Ketoamid 1 umgesetzt. Man erhielt 7,86 g eines rötlichen, glasartigen Festkörpers.

FT-IR: 2969, 2930, 2873, 1717, 1588, 1496, 1371, 1333, 1266, 1195, 1104, 1028, 991, 931, 903, 776, 734.

### Beispiel 2: Katalysator Mo2

Gemäss der allgemeinen Herstellvorschrift C wurden 3,70 g Dioxomolybdän(VI)-bis(acetylacetonat) und 5,60 g 1,3-Ketoamid 4 umgesetzt. Man erhielt 7,42 g eines bräunlichen, glasartigen Festkörpes.

FT-IR: 3305, 2972, 2930, 2873, 1715, 1588, 1514, 1446, 1401, 1361, 1267, 1182, 1104, 1028, 969, 932, 898, 795, 733, 701, 668.

### Beispiel 3: Katalysator Mo3

Gemäss der allgemeinen Herstellvorschrift C wurden 1,80 g Dioxomolybdän(VI)-bis(acetylacetonat) und 3,66 g 1,3-Ketoamid 5 umgesetzt. Man erhielt 4,46 g eines bräunlichen Öls.

FT-IR: 2968, 2869, 1720, 1626, 1564, 1517, 1446, 1401, 1369, 1266, 1182, 1092, 1007, 968, 931, 896, 794, 668.

### Beispiel 4: Katalysator Mo4

Gemäss der allgemeinen Herstellvorschrift C wurden 1,52 g Dioxomolybdän(VI)-bis(acetylacetonat) und 11,00 g 1,3-Ketoamid 6 umgesetzt. Man erhielt 11,35 g eines grünlichen, glasartigen Festkörpes.

FT-IR: 3307, 2969, 2868, 1737, 1629, 1566, 1522, 1451, 1371, 1091, 1011, 934, 906.

### Beispiel 5: Katalysator Mo5

Gemäss der allgemeinen Herstellvorschrift C wurden 2,83 g Dioxomolybdän(VI)-bis(acetylacetonat) und 13,32 g 1,3-Ketoamid 7 umgesetzt. Man erhielt 14,42 g eines bräunlichen Öls.

FT-IR: 3296, 2969, 2870, 1630, 1566, 1521, 1450, 1403, 1372, 1342, 1268, 1093, 1009, 967, 933, 904, 796.

### Allgemeine Herstellvorschrift D

In einem Rundkolben wurden getrocknetes Eisen(III)-tris(acetylacetonat) und eines der wie beschrieben hergestellten 1,3-Ketoamide vermischt und die Mischung unter Rühren während 3 Stunden auf 90 °C erwärmt. Darauf wurde das Reaktionsgemisch im Vakuum von den flüchtigen Bestandteilen befreit.

### Beispiel 6: Katalysator Fe1

Gemäss der allgemeinen Herstellvorschrift D wurden 2,65 g Eisen(III)-tris(acetylacetonat) und 16,54 g 1,3-Ketoamid 7 umgesetzt. Man erhielt 17,40 g eines braunroten Öls.

FT-IR: 3324, 2970, 2868, 1651, 1577, 1523, 1450, 1372, 1342, 1272, 2097, 1016, 968, 926, 864, 775, 667.

### Beispiel 7: Katalysator Fe2

Gemäss der allgemeinen Herstellvorschrift D wurden 1,41 g Eisen(III)-tris(acetylacetonat) und 15,70 g 1,3-Ketoamid 2 umgesetzt. Man erhielt 16,17 g eines braunroten Öls.

FT-IR: 2967, 2865, 1638, 1558, 1512, 1456, 1372, 1335, 1296, 1095, 1013, 926, 865, 763, 657.

### Beispiel 8: Katalysator Fe3

Gemäss der allgemeinen Herstellvorschrift D wurden 0,71 g Eisen(III)-tris(acetylacetonat) und 7,26 g 1,3-Ketoamid 6 umgesetzt. Man erhielt 7,69 g eines braunroten Öls.

FT-IR: 2967, 2865, 1638, 1558, 1512, 1456, 1372, 1335, 1296, 1095, 1013, 926, 865, 763, 657.

### Beispiel 9: Katalysator Fe4

Gemäss der allgemeinen Herstellvorschrift D wurden 3,54 g Eisen(III)-tris(acetylacetonat), 3,99 g N,N-Dibutyl-3-oxoheptanamid und 5,32 g 1,3-Ketoamid 3 umgesetzt. Man erhielt 10,32 g eines dunkelroten Öls.

FT-IR: 2957, 2930, 2871, 1636, 1556, 1511, 1461, 1370, 1331, 1271, 1226, 1200, 1102, 1019, 986, 956, 763, 661.

### Allgemeine Herstellvorschrift E

In einem Rundkolben wurden Zink(II)-bis(acetylacetonat) Hydrat (enthält ca. 2 Equivalente Wasser) und eines der wie beschrieben hergestellten 1,3-Ketoamide vermischt und die Mischung unter Rühren während 3 Stunden auf 90 °C erwärmt. Darauf wurde das Reaktionsgemisch im Vakuum von den flüchtigen Bestandteilen befreit.

### Beispiel 10: Katalysator Zn1

Gemäss der allgemeinen Herstellvorschrift E wurden 2,53 g Zink(II)-bis(acetylacetonat) Hydrat und 17,99 g 1,3-Ketoamid 7 umgesetzt. Man erhielt 18,24 g eines hellgelben Öls.

FT-IR: 3325, 2968, 2867, 1652, 1547, 1450, 1372, 1341, 1298, 1263, 1096, 1015, 964, 925, 866, 782.

### Beispiel 11: Katalysator Zn2

Gemäss der allgemeinen Herstellvorschrift E wurden 1,33 g Zink(II)-bis(acetylacetonat) Hydrat und 15,57 g 1,3-Ketoamid 2 umgesetzt. Man erhielt 16,15 g eines hellgelben Öls.

FT-IR: 2969, 2930, 2866, 1718, 1637, 1587, 1517, 1450, 1372, 1341, 1296, 1259, 1094, 1014, 925, 866, 768.

### Beispiel 12: Katalysator Zn3

Gemäss der allgemeinen Herstellvorschrift E wurden 1,31 g Zink(II)-bis(acetylacetonat) Hydrat und 9,04 g 1,3-Ketoamid 3 umgesetzt. Man erhielt 9,49 g eines hellgelben Öls.

FT-IR: 2968, 2927, 2874, 1717, 1634, 1579, 1513, 1444, 1372, 1333, 1258, 1199, 1100, 1017, 927, 859, 769.

### Beispiel 13: Katalysator Zn4

Gemäss der allgemeinen Herstellvorschrift E wurden 0,86 g Zink(II)-bis(acetylacetonat) Hydrat und 9,77 g 1,3-Ketoamid 8 umgesetzt. Man erhielt 9,88 g eines hellbraunen Öls.

FT-IR: 3325, 2865, 1712, 1666, 1585, 1546, 1451, 1348, 1251, 1095, 995, 947, 849, 780.

### Allgemeine Herstellvorschrift F

In einem Rundkolben wurden Coscat^{®} 83 (Bismut(III)-tris(neodecanoat) in Neodecansäure; 16% Bi; von Erbslöh) und eines der wie beschrieben hergestellten 1,3-Ketoamide vermischt und die Mischung unter Rühren während 2 Stunden auf 80 °C erwärmt. Darauf wurde das Reaktionsgemisch auf Raumtemperatur gekühlt.

### Beispiel 14: Katalysator Bi1

Gemäss der allgemeinen Herstellvorschrift F wurden 1,51 g Coscat^{®} 83 und 3,98 g 1,3-Ketoamid 2 umgesetzt. Man erhielt 5,48 g eines hellgelben Öls.

FT-IR: 2967, 2929, 2867, 1721, 1636, 1609, 1539, 1458, 1372, 1342k, 1296, 1253, 1097, 1013, 926, 867.

### Beispiel 15: Katalysator Bi2

Gemäss der allgemeinen Herstellvorschrift F wurden 2,76 g Coscat^{®} 83 und 1,40 g 1,3-Ketoamid 4 umgesetzt. Man erhielt 4,16 g eines hellgelben Öls.

FT-IR: 3330, 2959, 2931, 2874, 1698, 1636, 1544, 1460, 1360, 1254, 1156, 1108, 1015, 908, 817, 741.

### Beispiel 16: Katalysator Bi3

Gemäss der allgemeinen Herstellvorschrift F wurden 1,38 g Coscat^{®} 83 und 2,18 g 1,3-Ketoamid 3 umgesetzt. Man erhielt 3,56 g eines hellgelben Öls.

FT-IR: 2964, 2932, 2873, 1717, 1635, 1602, 1459, 1372, 1341, 1102, 1021, 928, 817, 772.

### Beispiel 17: Katalysator Bi4

Gemäss der allgemeinen Herstellvorschrift F wurden 1,45 g Coscat^{®} 83 und 1,39 g 1,3-Ketoamid 4 umgesetzt. Man erhielt 2,84 g eines hellgelben Öls.
FT-IR: 3304, 2962, 2932, 2872, 1714, 1644, 1545, 1458, 1359, 1253, 1153, 1106, 1022, 923, 817, 741.

### Zweikomponentige Polyurethan-Zusammensetzungen

### Beispiele 18 bis 21 und Vergleichsbeispiele V1 bis V4

Zur Herstellung der ersten Komponente wurden für jedes Beispiel ein Polyethertriol (Voranol^{®} CP 4755, von Dow) und ein Katalysator gemäß Tabelle 1 in einem Zentrifugalmischer (SpeedMixer™ DAC 150, FlackTek Inc.) während 30 sec. bei 3000 U/min. innig vermischt. Ein Teil der frisch hergestellten ersten Komponente wurde daraufhin in eine innenlackierte Aluminiumtube gefüllt, diese luftdicht verschlossen und während 7 Tagen in einem Umluftofen bei 60 °C gelagert.

Der verbleibende Teil der frisch hergestellten ersten Komponente wurde für jedes Beispiel auf die beschriebene Weise mit einem modifizierten, bei Raumtemperatur flüssigen Diphenylmethandiisocyanat (Desmodur^{®} CD-L, von Bayer) als zweite Komponente gemäß Tabelle 1 zu einer Polyurethan-Zusammensetzung vermischt.

Ebenso wurde für jedes Beispiel die während 7 Tagen bei 60 °C gelagerte erste Komponente mit der zweiten Komponente gemäß Tabelle 1 auf die gleiche Weise zu einer Polyurethan-Zusammensetzung vermischt.

| Beispiel | **18** | **V1** | **19** | **V2** | **20** | **V3** | **21** | **V4** |
|---|---|---|---|---|---|---|---|---|
| *Erste Komponente:* | | | | | | | | |
| Voranol^{®} CP 4755 | 50 | 50 | 50 | 50 | 50 | 50 | 50 | 50 |
| **Katalysator Mo5** | 0,34 | - | - | - | - | - | - | - |
| M0O₂(acac)₂^{a} | - | 0,30 | - | - | - | - | - | - |
| **Katalysator Fe1** | - | - | 0,58 | - | - | - | - | - |
| Fe(acac)₃^{b} | - | - | - | 0,43 | - | - | - | - |
| **Katalysator Zn3** | - | - | - | - | 0,27 | - | - | - |
| Zn(acac)₂^{c} | - | - | - | - | - | 0,20 | - | - |
| **Katalysator Bi4** | - | - | - | - | - | - | 0,026 | - |
| Coscat^{®} 83^{d} | - | - | - | - | - | - | - | 0,013 |
| mmol-Equiv./100g^{e} | 0,37 | 0,41 | 0,45 | 0,45 | 0,23 | 0,23 | 0,018 | 0,018 |

| *Zweite Komponente:* | | | | | | | | |
|---|---|---|---|---|---|---|---|---|
| Desmodur^{®} CD-L | 5,10 | 5,10 | 5,10 | 5,10 | 5,10 | 5,10 | 5,10 | 5,10 |
| **Tabelle 1: Zweikomponentige Polyurethan-Zusammensetzungen** (Mengen in Gewichtsteilen). | | | | | | | | |
| ^{a} 25%ige Suspension von Dioxomolybdän(VI)-bis(acetylacetonat) in N-Ethyl-2-pyrrolidon. ^{b} 20,6%ige Suspension von Eisen(III)-tris(acetylacetonat) in N-Ethyl-2-pyrrolidon. ^{c} 19,3%ige Suspension von Zink(II)-bis(acetylacetonat) Hydrat in Methyl-ethylketon. ^{d} Bismut-tris(neodecanoat) in Neodecansäure (16% Bi, von Erbslöh). ^{e} mmol-Equivalente Metallatome des Katalysators auf 100 g der Zusammensetzung. | | | | | | | | |

Die Polyurethan-Zusammensetzungen wurden auf Aspekt, Zeit bis zur Klebefreiheit, Blasenbildung sowie Shore A-Härte geprüft, und zwar jeweils sowohl für die Zusammensetzung mit der frisch hergestellten ersten Komponente als auch für die Zusammensetzung mit der während 7 Tagen bei 60 °C gelagerten ersten Komponente. Ausschließlich für die Zusammensetzung mit der frisch hergestellten ersten Komponente wurde weiterhin die mechanischen Eigenschaften im Zugversuch gemessen, und zwar vor und nach verschiedenen Lagerungen zur beschleunigten Alterung der Proben.

Der Aspekt der Zusammensetzung wurde rein optisch beurteilt und als "klar", "trüb" oder inhomogen ("inh.") gewertet.

Zur Bestimmung der Zeit bis zur Klebefreiheit (Hautbildungszeit) wurden die raumtemperaturwarmen Zusammensetzungen in einer Schichtdicke von ca. 3 mm auf Pappkarton aufgetragen und im Normklima ("NK"; 23±1 °C, 50±5% relative Luftfeuchtigkeit) jeweils die Zeit bestimmt, die es dauerte, bis beim leichten Antippen der Oberfläche einer Zusammensetzung mittels einer Pipette aus LDPE erstmals keine Rückstände auf der Pipette mehr zurückblieben.

Die Blasenbildung wurde optisch beurteilt anhand der Menge ("viele", "einige", "keine") an Gasblasen, die in der für die Bestimmung der Hautbildungszeit angesetzten Zusammensetzung während deren Aushärtung auftrat.

Die Shore A-Härte wurde bestimmt nach DIN 53505 an während 7 Tagen im Normklima ausgehärteten Prüfkörpern.

Zur Bestimmung der mechanischen Eigenschaften im Zugversuch wurde von den Zusammensetzungen Filme von ca. 3 mm Dicke hergestellt, indem die Zusammensetzung in eine plane PTFE-Form gegossen und während 7 Tagen im Normklima ausgehärtet wurde. Es wurden klebfreie und elastische Filme erhalten. Aus den Filmen wurden Hanteln mit einer Länge von 75 mm, bei einer Steglänge von 30 mm und einer Stegbreite von 4 mm, ausgestanzt und ein Teil davon gemäß DIN EN 53504 bei einer Zuggeschwindigkeit von 200 mm/min auf Zugfestigkeit, Bruchdehnung und E-Modul (bei 0,5 bis 5,0% Dehnung) geprüft. Der verbleibende Teil der Hanteln wurde während 1 Tag bei 100 °C im Umluftofen, bzw. während 10 Tagen unter "Kataplasma" (40 °C und 100% relative Luftfeuchtigkeit), bzw. während 10 Tagen unter "Kataplasma" sowie 1 Tag bei 100 °C, gelagert, darauf jeweils während einem Tag im Normklima gehalten und gemäß DIN EN 53504 wie beschrieben geprüft.

Die Ergebnisse dieser Prüfungen sind in der Tabelle 2 aufgeführt.

| Beispiel | **18** | **V1** | **19** | **V2** | **20** | **V3** | **21** | **V4** |
|---|---|---|---|---|---|---|---|---|
| *Zusammensetzung mit frisch hergestellter erster Komponente:* | | | | | | | | |
| Aspekt | klar | inh. | klar | inh. | klar | inh. | klar | klar |
| Hautbildungszeit (min.) | 20 | 18 | 35 | 120 | 83 | 85 | 25 | 160 |
| Shore A-Härte | 43 | 42 | 44 | 32 | 40 | 45 | 47 | 44 |
| Blasenbildung | keine | keine | keine | einige | keine | keine | keine | keine |
| Zugfestigkeit (MPa): 7d/NK | 0,90 | 0,84 | 0,90 | 0,78 | 0,82 | 1,00 | 0,90 | 1,08 |
| +10d/Kataplasma | 0,97 | 0,90 | 0,96 | 0,75 | 0,77 | 0,74 | 0,77 | 0,76 |
| +1d/100°C | 0,91 | 0,89 | 0,82 | 0,93 | 0,86 | 0,90 | 0,84 | 0,94 |
| +10d/Kataplasma+1d/100°C | 1,00 | 0,85 | 0,97 | 0,73 | 0,97 | 0,98 | 0,89 | 0,85 |
| Bruchdehnung (%): 7d/NK | 70 | 62 | 63 | 86 | 119 | 94 | 87 | 129 |
| +10d/Kataplasma | 82 | 72 | 70 | 89 | 107 | 62 | 74 | 74 |
| +1d/100°C | 85 | 71 | 181 | 97 | 85 | 64 | 96 | 99 |
| +10d/Kataplasma+1d/100°C | 95 | 62 | 81 | 83 | 114 | 74 | 97 | 87 |
| E-Modul (MPa): 7d/NK | 1,99 | 1,91 | 1,92 | 1,46 | 1,00 | 1,75 | 1,60 | 1,39 |
| +10d/Kataplasma | 1,75 | 2,16 | 1,96 | 1,30 | 1,25 | 1,63 | 1,62 | 1,48 |
| +1d/100°C | 1,68 | 1,95 | 0,65 | 1,28 | 1,58 | 1,96 | 1,42 | 1,55 |
| +10d/Kataplasma+1d/100°C | 1,70 | 1,94 | 1,65 | 1,34 | 1,42 | 1,89 | 1,52 | 1,47 |

| *Zusammensetzung mit gelagerter erster Komponente:* | | | | | | | | |
|---|---|---|---|---|---|---|---|---|
| Aspekt | klar | klar | klar | inh. | klar | klar | klar | klar |
| Hautbildungszeit (min.) | 15 | 7 | 34 | 73 | 80 | 70 | 50 | >300 |
| Shore A-Härte | 48 | 41 | 46 | 37 | 45 | 45 | 48 | 45 |
| Blasenbildung | keine | keine | keine | keine | keine | einige | keine | einige |
| **Tabelle 2: Eigenschaften der zweikomponentigen Polyurethan-Zusammensetzungen** | | | | | | | | |

Aus der Tabelle 2 ist ersichtlich, dass die zweikomponentigen Polyurethanzusammensetzungen mit den erfindungsgemäßen Katalysatoren klare, homogene Mischungen darstellen, welche sowohl vor wie auch nach Lagerung vergleichsweise kurze Hautbildungszeiten aufweisen und blasenfrei zu einem Material mit vergleichsweise hoher Festigkeit und guter Beständigkeit aushärten.

### Beispiele 22 bis 35

Wie für Beispiel 18 beschrieben wurden zur Herstellung der ersten Komponente jeweils ein Polyethertriol (Voranol^{®} CP 4755, von Dow) und ein Katalysator gemäß Tabelle 3 vermischt. Ein Teil der frisch hergestellten ersten Komponente wurde daraufhin in eine innenlackierte Aluminiumtube gefüllt, diese luftdicht verschlossen und während 7 Tagen in einem Umluftofen bei 60 °C gelagert.

Der verbleibende Teil der frisch hergestellten ersten Komponente wurde für jedes Beispiel auf die für Beispiel 18 beschriebene Weise mit einem modifizierten, bei Raumtemperatur flüssigen Diphenylmethandiisocyanat (Desmodur^{®} CD-L, von Bayer) als zweite Komponente gemäß Tabelle 3 zu einer Polyurethan-Zusammensetzung vermischt.

Ebenso wurde für jedes Beispiel die während 7 Tagen bei 60 °C gelagerte erste Komponente mit der zweiten Komponente gemäß Tabelle 3 auf die gleiche Weise zu einer Polyurethan-Zusammensetzung vermischt.

Die Polyurethan-Zusammensetzungen wurden wie für Beispiel 18 beschrieben auf Aspekt, Zeit bis zur Klebefreiheit, Blasenbildung, Shore A-Härte sowie die mechanischen Eigenschaften im Zugversuch geprüft.

Die Ergebnisse dieser Prüfungen sind in der Tabelle 4 aufgeführt.

| Beispiel | **22** | **23** | **24** | **25** | **26** | **27** | **28** | **29** | **30** | **31** | **32** | **33** | **34** | **35** |
|---|---|---|---|---|---|---|---|---|---|---|---|---|---|---|
| *Erste Komponente:* | | | | | | | | | | | | | | |
| Voranol^{®} CP 4755 | 30 | 30 | 30 | 30 | 30 | 30 | 30 | 30 | 30 | 30 | 30 | 30 | 30 | 30 |
| **Katalysator Mo1** | 0,31 | - | - | - | - | - | - | - | - | - | - | - | - | - |
| **Katalysator Mo2** | - | 0,26 | - | - | - | - | - | - | - | - | - | - | - | - |
| **Katalysator Mo3** | - | - | 0,31 | - | - | - | - | - | - | - | - | - | - | - |
| **Katalysator Mo4** | - | - | - | 0,97 | - | - | - | - | - | - | - | - | - | - |
| **Katalysator Mo5** | - | - | - | - | 0,67 | - | - | - | - | - | - | - | - | - |
| **Katalysator Fe2** | - | - | - | - | - | 1,43 | - | - | - | - | - | - | - | - |
| **Katalysator Fe3** | - | - | - | - | - | - | 1,16 | - | - | - | - | - | - | - |
| **Katalysator Fe4** | - | - | - | - | - | - | - | 0,36 | - | - | - | - | - | - |
| **Katalysator Zn1** | - | - | - | - | - | - | - | - | 0,43 | - | - | - | - | - |
| **Katalysator Zn2** | - | - | - | - | - | - | - | - | - | 0,73 | - | - | - | - |
| **Katalysator Zn4** | - | - | - | - | - | - | - | - | - | - | 0,66 | - | - | - |
| **Katalysator Bi1** | - | - | - | - | - | - | - | - | - | - | - | 0,038 | - | - |
| **Katalysator Bi2** | - | - | - | - | - | - | - | - | - | - | - | - | 0,016 | - |
| **Katalysator Bi3** | - | - | - | - | - | - | - | - | - | - | - | - | - | 0,049 |
| mmol-Equiv./100g^{a} | 1,17 | 1,19 | 1,15 | 1,17 | 1,19 | 1,02 | 0,89 | 1,04 | 0,59 | 0,59 | 0,57 | 0,024 | 0,025 | 0,044 |

| *Zweite Komponente:* | | | | | | | | | | | | | | |
|---|---|---|---|---|---|---|---|---|---|---|---|---|---|---|
| Desmodur^{®} CD-L | 3,10 | 3,10 | 3,10 | 3,10 | 3,10 | 3,10 | 3,10 | 3,10 | 3,10 | 3,10 | 3,10 | 3,10 | 3,10 | 3,10 |
| **Tabelle 3: Zweikomponentige Polyurethan-Zusammensetzungen.** | | | | | | | | | | | | | | |
| ^{a} mmol-Equivalente Metallatome des Katalysators auf 100 g der Zusammensetzung. | | | | | | | | | | | | | | |

| Beispiel | **22** | **23** | **24** | **25** | **26** | **27** | **28** | **29** | **30** | **31** | **32** | **33** | **34** | **35** |
|---|---|---|---|---|---|---|---|---|---|---|---|---|---|---|
| *Zusammensetzung mit frisch hergestellter erster Komponente:* | | | | | | | | | | | | | | |
| Aspekt | klar | klar | klar | klar | klar | klar | klar | klar | klar | klar | klar | klar | klar | klar |
| Hautbildungszeit (min.) | 50 | 15 | 20 | 8 | 9 | 60 | 44 | 32 | 7 | 10 | 7 | 2 | 1 | 4 |
| Shore A-Härte | 44 | 46 | 45 | 39 | 43 | 41 | 45 | 46 | 41 | 43 | 49 | 47 | 49 | 50 |
| Blasenbildung | keine | keine | keine | keine | keine | keine | keine | keine | keine | keine | keine | keine | keine | keine |

| *Zusammensetzung mit gelagerter erster Komponente:* | | | | | | | | | | | | | | |
|---|---|---|---|---|---|---|---|---|---|---|---|---|---|---|
| Aspekt | klar | klar | klar | klar | klar | klar | klar | klar | klar | klar | klar | klar | klar | klar |
| Hautbildungszeit (min.) | 40 | 14 | 9 | 15 | 4 | 55 | 40 | 37 | 9 | 9 | 5 | 5 | 4 | 9 |
| Shore A-Härte | 45 | 45 | 47 | 47 | 47 | 47 | 46 | 48 | 48 | 46 | 45 | 48 | 47 | 48 |
| Blasenbildung | keine | keine | keine | keine | keine | keine | keine | keine | keine | keine | keine | keine | keine | keine |
| **Tabelle 4: Eigenschaften der zweikomponentigen Polyurethan-Zusammensetzungen.** | | | | | | | | | | | | | | |

Aus der Tabelle 4 ist ersichtlich, dass die zweikomponentigen Polyurethanzusammensetzungen mit den erfindungsgemäßen Katalysatoren klare, homogene Mischungen darstellen, welche sowohl vor wie auch nach Lagerung vergleichsweise kurze Hautbildungszeiten aufweisen und weitgehend blasenfrei zu einem Material mit guter Shore A-Härte aushärten.

## Patentansprüche

1. Metall-Komplexverbindung der Formel Mₖ(L)ₓ(Y)_{kz-nx}, wobei M für ein z-wertiges Metallkation, ausgewählt aus Metallkationen und Oxometallkationen der Übergangsmetalle oder der metallischen Hauptgruppenelemente der Gruppen 13 bis 15 steht, k für eine ganze Zahl von 1 bis 20 steht, x für 1, 2, 3 oder 4 steht, z für 2, 3 oder 4 steht, n für 1, 2 oder 3 steht, Y für einen einfach negativ geladenen Liganden steht und L für einen Liganden der Formel (I) steht, 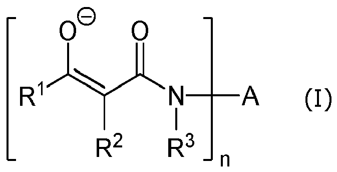 wobei R¹ und R² unabhängig voneinander für einen Wasserstoff-Rest, für einen einwertigen gesättigten oder ungesättigten Kohlenwasserstoff-Rest mit 1 bis 10 Kohlenstoff-Atomen, oder zusammen für einen zweiwertigen Alkylen-Rest mit 3 bis 6 Kohlenstoffatomen stehen,
R³ für einen Wasserstoff-Rest, einen einwertigen gesättigten Kohlenwasserstoff-Rest, der gegebenenfalls Heteroatome enthält, mit 1 bis 12 Kohlenstoffatomen, oder zusammen für einen zweiwertigen Alkylen-Rest, der gegebenenfalls Heteroatome enthält, mit 3 bis 6 Kohlenstoffatomen steht, und
A für einen Polyoxyalkylen-Rest oder einen Rest einer polyoxyalkylierten Verbindung gegebenenfalls mit einer oder zwei endständigen 1,3-Ketoamid-Gruppen der Formel 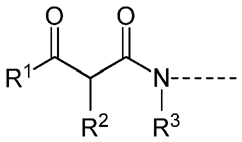 steht.

2. Metall-Komplexverbindung nach Anspruch 1, wobei das Metallkation ein Metallkation oder Oxometallkation von Scandium, Yttrium, Lanthan, Titan, Zirkonium, Hafnium, Vanadium, Niob, Tantal, Chrom, Molybdän, Wolfram, Mangan, Eisen, Cobalt, Nickel, Kupfer, Zink, Aluminium, Gallium, Indium, Germanium, Zinn, Blei, Antimon und Bismut, vorzugsweise von Lanthan, Titan, Zirkonium, Molybdän, Eisen, Zink, Zinn oder Bismut ist.

3. Metall-Komplexverbindung nach mindestens einem der vorangegangenen Ansprüche, wobei das Metallkation oder Oxometallkation ein Dioxomolybdän(VI)-, ein Eisen(III)-, ein Zink(II)-, ein Bismut(III)- oder ein Zirkonium(IV)-Kation ist.

4. Metall-Komplexverbindung nach mindestens einem der vorangegangenen Ansprüche, wobei R¹ für einen Alkyl-Rest mit 1 bis 4 Kohlenstoffatomen, bevorzugt einen Methyl-Rest, oder einen Phenyl-Rest steht.

5. Metall-Komplexverbindung nach mindestens einem der vorangegangenen Ansprüche, wobei R² für einen Wasserstoff-Rest steht.

6. Metall-Komplexverbindung nach mindestens einem der vorangegangenen Ansprüche, wobei R³ für einen Wasserstoff-Rest, einen Alkyl-Rest mit 1 bis 8 Kohlenstoffatomen, vorzugsweise einen Wasserstoff-, einen Methyl- oder einen Isopropyl-Rest, oder einen Benzyl-Rest steht.

7. Metall-Komplexverbindung nach mindestens einem der vorangegangenen Ansprüche, wobei A für einen Polyoxyalkylen-Rest oder einen Rest einer polyoxyalkylierten Verbindung mit einem mittleren Molekulargewicht Mₙ von etwa 200 bis 5000 g/mol, vorzugsweise von etwa 200 bis 2000 g/mol, steht.

8. Metall-Komplexverbindung nach mindestens einem der vorangegangenen Ansprüche, wobei n für 1 oder 2 steht.

9. Verfahren zur Herstellung einer Metall-Komplexverbindung, wobei ein 1,3 Ketoamid der Formel 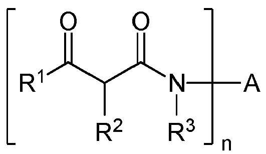 mit R¹, R², R³, A und n, wie vorstehend definiert, mit einem Metall-Salz oder einem Metall-Komplex, ausgewählt aus einem Salz oder einem Komplex eines Übergangsmetalls oder eines metallischen Hauptgruppenelements der Gruppen 13 bis 15, bevorzugt Scandium, Yttrium, Lanthan, Titan, Zirkonium, Hafnium, Vanadium, Niob, Tantal, Chrom, Molybdän, Wolfram, Mangan, Eisen, Cobalt, Nickel, Kupfer, Zink, Aluminium, Gallium, Indium, Germanium, Zinn, Blei, Antimon oder Bismut, besonders bevorzugt Lanthan, Titan, Zirkonium, Molybdän, Eisen, Zink, Zinn oder Bismut, und ganz besonders bevorzugt mit einem Dioxomolybdän(VI)-, Eisen(III)-, Zink(II)-, Bismut(III)- oder Zirkonium(IV) -Salz oder -Komplex, umgesetzt wird.

10. Verfahren nach Anspruch 9, wobei als Salz oder Komplex Chloride, Carbonate, Carboxylate oder 1,3 Diketonate eingesetzt werden.

11. Metall-Komplexverbindung, erhältlich nach mindestens einem Verfahren gemäß einem der Ansprüche 9 und 10.

12. Verwendung der Metall-Komplexverbindung nach mindestens einem der vorangegangenen Ansprüche 1 bis 8 und 11 als Katalysator für härtbare Massen, insbesondere für Polyurethan-Zusammensetzungen.

13. Zweikomponentige Polyurethan-Zusammensetzungen, umfassend mindestens ein Polyol, vorzugsweise ein Polyetherpolyol, als erste Komponente, mindestens ein Polyisocyanat, vorzugsweise ein Diisocyanat, als zweite Komponente und mindestens eine Metall-Komplexverbindung nach mindestens einem der Ansprüche 1 bis 8 und 11.

14. Zweikomponentige Polyurethan-Zusammensetzung nach Anspruch 13, wobei die Metall-Komplexverbindung in der ersten Komponente enthalten ist.

15. Verwendung der zweikomponentigen Polyurethan-Zusammensetzung nach mindestens einem der Ansprüche 13 und 14 als Vergussmasse, Dichtstoff, Klebstoff, Belag, Beschichtung, Lack, Voranstrich, Formteil, Elastomer für Bau- und Industrieanwendungen.
